(19) Europäisches Patentamt
European Patent Office
Office européen des brevets

(11) **EP 3 579 108 B1**

(12) **FASCICULE DE BREVET EUROPEEN**

(45) Date de publication et mention de la délivrance du brevet:
**13.03.2024 Bulletin 2024/11**

(21) Numéro de dépôt: **19178119.4**

(22) Date de dépôt: **04.06.2019**

(51) Classification Internationale des Brevets (IPC):
**G06F 9/50** *(2006.01)*  **G06F 9/52** *(2006.01)*

(52) Classification Coopérative des Brevets (CPC):
**G06F 9/52; G06F 9/5016**

(54) **CONTRÔLEUR DE PARTAGE DE RESSOURCES D'UNE PLATE-FORME INFORMATIQUE ET PROCÉDÉ ASSOCIÉ DE PARTAGE DES RESSOURCES**

DIGITAL PLATTFORM RESOURCE SHARING CONTROLLER UND ZUGEHÖRIGES VERFAHREN FÜR RESOURCE SHARING

DIGITAL PLATFORM RESOURCE SHARING CONTROLLER AND ASSOCIATED METHOD FOR RESOURCE SHARING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2018 FR 1800564**

(43) Date de publication de la demande:
**11.12.2019 Bulletin 2019/50**

(73) Titulaire: **Thales**
**92400 Courbevoie (FR)**

(72) Inventeurs:
• **HOULBERT, David**
  **33160 Saint Médard en Jalles (FR)**
• **FINE, Alexandre**
  **33160 Saint Médard en Jalles (FR)**
• **DUBOIS, Nicolas**
  **33160 Saint Médard en Jalles (FR)**
• **SANSON, Frederic**
  **33185 Le Haillan (FR)**
• **JARDIN, M. Laurent**
  **33127 Saint Jean d'Illac (FR)**

(74) Mandataire: **Lavoix**
**2, place d'Estienne d'Orves**
**75441 Paris Cedex 09 (FR)**

(56) Documents cités:
WO-A1-2016/034447    FR-A1- 2 919 084
FR-A1- 3 041 788    US-A- 5 867 686
US-A1- 2009 217 280

**Description**

La présente invention concerne le domaine des plates-formes informatiques comprenant au moins un processeur, un support de stockage de données, des applications logicielles aptes à être exécutées sur le processeur et comprenant des commandes d'accès au support de stockage.

Une mémoire de masse est un support de stockage de grande capacité (typiquement de plus de 8 GB, ou encore de plus de 256 GB ou encore au-delà), non volatile, et qui peut être lue et écrite par des applications exécutées sur un processeur. Les supports de ces mémoire de masse peuvent être de type varié, par exemple de type bande magnétique, disque dur, disque à semi-conducteur (en anglais « Solid-State Drive » ou SSD), carte SD (« Secure Digital »), disque optique (CD, DVD, Blu-ray), disque magnéto-optique, mémoire flash .... et comprennent des cellules mémoires unitaires et un contrôleur de mémoire adapté pour opérer sur les cellules en fonction des commandes reçues et pour en délivrer ou y enregistrer des données issues de ces opérations.

Les performances induites par les technologies de mémoires de masse partagées entre les applications et la quantité de données manipulées ne sont pas compatibles d'une exécution en temps bref (par exemple inférieur à inférieur à 100 ms) des opérations menées sur ces mémoires. Ces opérations sont typiquement des opérations de création, de lecture, d'écriture, de suppression, de nommage, de classement, d'archivage notamment, commandées par les applications, appliquées sur des zones de mémoire de taille variable et elles sont menées sur la mémoire de masse via un gestionnaire de fichiers.

FR 2 919 084 A1 décrit un procédé de gestion de ressources d'un système informatique.

Dans le secteur de l'avionique entre autres, avec l'augmentation du nombre, et la complexité croissante, des fonctions avioniques, les fabricants groupent plusieurs applications logicielles sur une même plate-forme de traitement informatique à haute performance. Pour répondre à ce nouveau contexte, des directives dites d'Avionique Modulaire intégrée (en anglais « Integrated Modular Avionics » ou IMA) ont été développées, selon lesquelles une plate-forme de traitement informatique doit pouvoir assurer un partitionnement robuste, temporel et spatial, entre les applications, leur permettant de partager une même plate-forme et ses ressources, parmi lesquelles notamment les supports de stockage de données, encore appelées mémoires de masse.

A titre d'illustration, dans l'avionique, les applications « Système de Vision Synthétique », dite SVS et « Gestion de Vol », dite FMS, « Terrain Avoidance Warning System » dite TAWS utilisent toutes trois les données de définition de cartes de sol et de relief communes et donc nécessairement partagées en accès, en association desquelles il est en outre possible pour les applications de stocker des annotations, des fichiers journaux (« log files ») etc., l'ensemble étant stocké sur une mémoire de masse de 16 GB à 256 GB.

Il existe donc un besoin accru de garantir un partitionnement robuste entre plusieurs applications partageant des fichiers pouvant être communs ou propres à chaque application au sein d'une même mémoire de masse, dans un contexte de traitement en temps réel.

A cet effet, suivant un premier aspect, l'invention propose un contrôleur de partage de ressources selon l'une quelconque des revendications 1 à 5.

L'invention permet de garantir un partage maîtrisé entre les applications de l'accès au support de stockage de données qui limite les risques de débordement d'une application sur les autres, correspondant aux particularités des mémoires de masse. Ce partage permet d'assurer l'indépendance des applications pour les accès à la ressource mémoire de masse.

L'invention permet d'allouer par application un intervalle (en anglais « slot ») temporel et de la mémoire. L'utilisation du slot temporel par rapport à une bande passante ou quantité de donnée a pour avantage de s'abstraire de la grande variabilité de performance des technologies mémoires de masse en fonction de la taille et du type accès séquentiel ou aléatoire. L'invention permet d'avoir une totale indépendance entre les applications utilisant la même ressource afin de permettre l'intégration de plusieurs applications sur le même module tout en répondant à des besoins de sûreté de fonctionnement, mais aussi d'efficacité de développement.

L'invention contribue en outre à la diminution du nombre de calculateurs (partage d'une plateforme entre plusieurs applications) et à la réduction des travaux pour une certification, par exemple européenne ETSO (de l'anglais « European Technical Standard Order »).

Suivant un deuxième aspect, la présente invention propose une plate-forme informatique selon la revendication 6 ou 7.

Suivant un troisième aspect, la présente invention propose un procédé de partage des ressources selon l'une quelconque des revendications 8 à 10.

Suivant un autre aspect, la présente invention propose un programme d'ordinateur comprenant des instructions qui, lorsque le programme est exécuté par un ordinateur, conduisent celui-ci à mettre en oeuvre le procédé suivant le troisième aspect de l'invention.

Suivant un autre aspect, la présente invention propose un support lisible par ordinateur, sur lequel est enregistré le programme d'ordinateur suivant le précédent aspect de l'invention.

Ces caractéristiques et avantages de l'invention apparaîtront à la lecture de la description qui va suivre, donnée uniquement à titre d'exemple, et faite en référence aux dessins annexés, sur lesquels :

- la figure 1 représente une vue d'une plate-forme de traitement dans un mode de réalisation de l'invention ;
- la figure 2 est une vue d'un cycle de travail $T_{HW}$ dans un mode de réalisation de l'invention ;
- la figure 3 est un schéma illustrant un partitionnement temporel des opérations entre applications dans un mode de réalisation de l'invention ;
- la figure 4 est un schéma illustrant un partitionnement temporel des opérations entre applications dans un mode de réalisation de l'invention ;
- la figure 5 est un organigramme d'étapes mises en oeuvre dans un mode de réalisation de l'invention ;
- la figure 6 illustre un exemple de temps d'accès maximum à une mémoire de masse en fonction de la taille des données concernées.

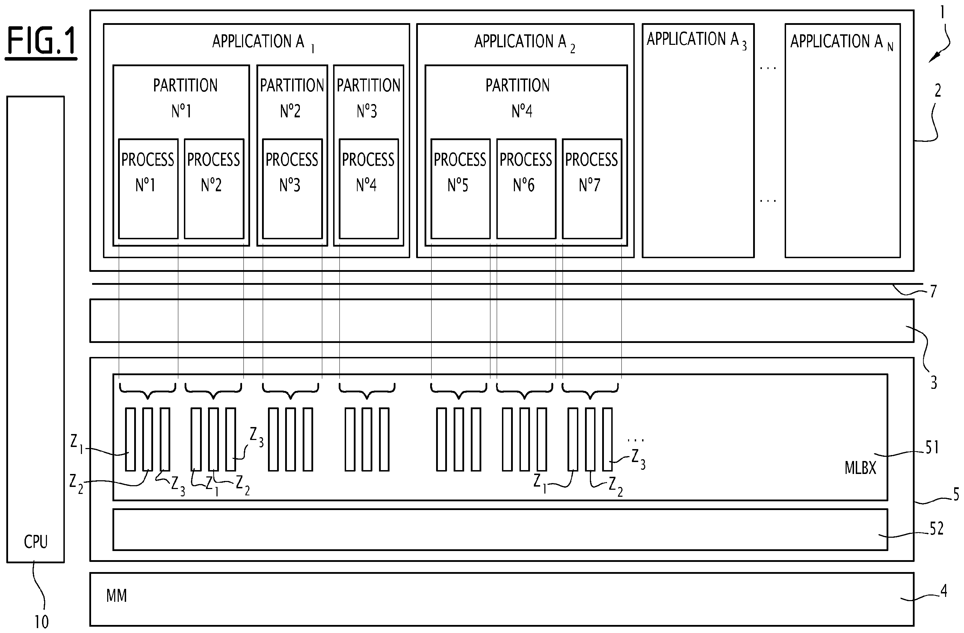

La figure 1 représente une vue d'une plate-forme de traitement informatique 1 dans un mode de réalisation de l'invention, par exemple dans le domaine de l'avionique.

Cette plate-forme 1 comprend, comme il est connu, un ou plusieurs processeur(s) 10, un ensemble 2 d'applications logicielles, un système de gestion de fichiers 3 et une mémoire de masse (MM) 4, dont l'usage est partagé entre les applications logicielles de l'ensemble 2.

La plate-forme 1 comprend en outre, selon l'invention, un contrôleur de partage de ressources 5, disposé entre le système de gestion de fichiers 3 et la mémoire de masse 4 et dont le rôle est d'assurer un partage de l'utilisation de cette mémoire de masse 4 entre les applications logicielles, pour éviter que le fonctionnement d'une application ne soit perturbé par le fonctionnement d'une autre application. Le partitionnement ici décrit est temporel et spatial, mais dans d'autres modes de réalisation, il peut être uniquement spatial ou uniquement temporel.

L'ensemble 2 d'applications logicielles comprend n applications logicielles (n nombre entier supérieur ou égal à 2) A1, A2, ... An, aptes à être exécutées sur le processeur 10. Parmi ces applications figurent par exemple les applications SVS et FMS. Et la MM 4 comprend par exemple des bases de données sol, dont le relief.

Dans le contexte de partitionnement temporel et spatial de ressources informatiques ARINC 653 du mode de réalisation ici considéré, une application logicielle peut donner lieu à plusieurs partitions de cette application (ARINC, Report 651, RTCA DO-255).

Une partition est un programme chargeable dans un espace d'adressage unique dans un module intégré, ici la plate-forme 1. La plate-forme 1 (via son système d'exploitation, non représenté) est adaptée pour contrôler l'utilisation, par une partition, du temps de traitement, de la mémoire de masse 4 et autres ressources, de sorte que chaque partition est isolée des autres partitions partageant la plate-forme 1.

Les partitions sont cadencées sur la base d'un cycle temporel de travail, maintenu par le système d'exploitation.

Une partition comprend un ou plusieurs unités de programmation, appelée(s) processus, partageant le même espace d'adressage, qui peuvent opérer en parallèle et qui se combinent dynamiquement pour fournir les fonctions associées à la partition.

Ainsi, lorsqu'une partition est en cours d'exécution, certains processus de la partition sont mis en oeuvre, eux-mêmes donnant lieu à l'exécution de commandes d'accès aux données de la mémoire de masse, via le système de gestion de fichiers 3 pour des opérations de création, de lecture, d'écriture, de suppression, de nommage, de classement, d'archivage de données entre le système de gestion de fichiers 3 et la mémoire de masse MM 4, pilotées selon l'invention par le contrôleur de partage de ressources 5.

Dans le cas considéré en référence à la figure 1, l'application A1 comprend par exemple 3 partitions (Partition n°i, i = 1 à 3). La partition n°1 comprend 2 processus (Process n°j, j= 1 à 2). La partition n°2 comprend le processus Process n°3. La partition n°3 comprend le processus Process n°4. L'application A2 comprend une partition (Partition n°4), qui comprend 3 processus (Process n°k, k= 5 à 7)...

Le contrôleur de partage de ressources 5 comprend un bloc d'échanges MLBX 51 et un bloc de traitement 52 adapté pour exécuter des commandes stockées dans des files de soumission $Z_k$ (k = 1 à 3) du bloc d'échanges MLBX 51, selon un algorithme particulier (permettant le partage de la bande passante), pour interpréter chaque commande pour les envoyer vers la mémoire de masse 4 en tenant compte du vieillissement des composants, pour maintenir les données disponibles dans le temps.

**Partitionnement temporel**

La bande passante, i.e. la taille globale des données auxquelles il peut être accédé pendant un temps donné, de la ressource matérielle 4 (par exemple inférieure à 100 MB/s) couplée à la taille de fichier manipulé, (par exemple environ 1 MB) par les applications avioniques n'est pas adaptée au traitement en temps réel, typiquement correspondant à des fréquences situées entre 1 et 15 Hertz, de même que les communications fractionnées entre le système de gestion de fichiers et la ressource matérielle MM 4 pendant des opérations d'ouverture de fichier OPEN_FILE() ou d'ouverture de répertoire OPEN_DIRECTORY(). En outre, les temps requis par les opérations de lecture ou écriture sont non déterministes.

Le contrôleur de partage de ressources 5 selon l'invention correspond à une couche supplémentaire, par rapport aux architectures traditionnelles de plate-forme informatique, disposée entre le système de gestion de fichiers 3 et la ressource matérielle MM 4, et est adapté pour séquencer les requêtes parallèles en provenance des applications et destinées à cette mémoire de masse MM 4 tout en assurant une distribution de la capacité d'accès maximum de la mémoire de masse en fonction de ratios de cette capacité maximum attribués aux partitions respectives en tenant compte des pires cas de temps d'exécution. Cette caractérisation « pire cas de temps d'exécution » prend en compte la grande variabilité de performance de la mémoire de masse et les variabilités introduites par l'algorithme interne de la mémoire de masse optimisant sa durée de vie et la rétention de données.

Le contrôleur de partage de ressources 5 est adapté pour traiter les opérations en cours requises par une partition selon les caractéristiques suivantes :

- même si une autre partition est alors en train de travailler sur le processeur 10 ;
- en respectant des priorités prédéterminées.

Le contrôleur de partage de ressources 5 est adapté pour opérer dans un cycle de travail, en deux étapes. Il distribue d'abord à chaque partition le ratio d'accès à la mémoire de masse 4 qui lui a été alloué (correspondant donc à une valeur de bande passante, de temps) ou de volume de données selon la représentation considérée de la capacité d'accès à la mémoire de masse, ces représentations étant équivalentes) ; puis s'il reste du temps d'ici la fin du cycle de travail après l'exécution des commandes que chaque partition s'est vue autorisée à exécuter en fonction du ratio d'accès qui lui a été attribué et du pire cas d'exécution théorique de chaque commande, la bande passante équivalente au temps restant est redistribuée.

En considérant que l'ensemble d'applications A comportent 3 partitions A, B, C et que les bandes passantes suivantes ont été attribuées :

Partition A : 1MB/s ;
Partition B : 1,5 MB/s ;
Partition C : 500 KB/s ;

- dans un premier exemple, dans l'hypothèse où la performance globale de la mémoire de masse dans le pire temps d'exécution est égale à 8 MB/s, toute e la capacité offerte d'accès à la mémoire de masse 4 n'est pas consommée et le reste du volume de données, (ou encore de bande passante ou de temps) est redistribué aux partitions par le contrôleur de partage de ressources 5 pour améliorer les temps de traitement ;
- dans un autre exemple, dans l'hypothèse où la performance globale de la mémoire de masse dans le pire temps d'exécution est égale à 3 MB/s, si la performance réelle est meilleure que la performance du pire temps de traitement, toute la bande passante qui n'est pas consommée est redistribuée aux partitions par le contrôleur de partage de ressources 5 pour améliorer les temps de traitement.

Dans le mode de réalisation considéré, les applications de l'ensemble 2 et le système de gestion de fichiers 3, relevant du domaine logiciel communiquent, à travers une interface de type NVMHCI (en anglais « Non-Volatile Memory Host Controller Interface »), dite aussi NVMe, avec le domaine matériel auquel appartiennent le contrôleur de partage de ressources 5 et la mémoire de masse 4. L'implémentation du contrôleur de partage de ressources 5 pourrait dans un autre mode de réalisation être réalisée dans une autre technologie d'interface, par exemple de type SATA (en anglais « Serial Advanced Technology Attachment »).

La dernière couche du système de gestion de fichiers 3, en charge de la communication avec la mémoire de masse 4 via le contrôleur de partage de ressources 5 est adaptée pour poster au contrôleur de partage de ressources 5 des commandes de lecture, d'écriture ou de « purge » (i.e. pour vider des cellules de mémoire) issues des processus en cours).

Chaque nouvelle commande ainsi postée est stockée dans une file de soumission qui se trouve dans le bloc d'échanges MLBX 51 du contrôleur de partage de ressources 5 : le bloc d'échanges MLBX 51 comprend, pour chaque processus dans chaque partition, une file de soumission Z, qui lui est dédiée exclusivement (où sont placées les commandes postées par le système de gestion de fichiers 3 et dont la réalisation est non encore terminée), une file de réalisation $Z_2$ qui lui est dédiée exclusivement (où sont placés les statuts d'exécution des commandes et une aire de données $Z_3$ qui lui est dédiée exclusivement (où sont placées les données associées à la lecture ou l'écriture, comme représenté en figure 1.

On peut caractériser l'utilisation d'une ressource par une application sur la base d'un « pire cas de temps d'exécution » et/ou sur la base d'un « temps moyen d'exécution » relatif(s) à une instruction ou à un ensemble d'instructions mises en oeuvre suite à l'exécution de l'application et comprenant un ou des accès à la ressource. Typiquement, une telle instruction correspond par exemple à la réalisation d'au moins une commande de lecture, d'écriture, de suppression, d'archivage de données dans la ressource. La différence entre les deux valeurs de « pire cas de temps d'exécution » et « temps moyen d'exécution » est généralement faible (pas plus d'un facteur 2) pour les ressources classiques, mais il en va radicalement autrement pour les mémoires de masse où les performances peuvent être multipliées par 10 ou plus : par exemple une opération d'effacement de bloc d'une cellule flash NAND peut prendre de 1,5 milliseconde (ms) à 15 ms.

Le contrôleur de partage de ressources 5 est adapté pour distribuer la capacité d'accès à la mémoire de masse MM 4 entre les différentes partitions actives, en respectant des allocations de capacité d'accès à la mémoire de masse théoriques respectivement attribuées à ces applications. Dans un mode de réalisation, le contrôleur de partage de ressources 5 est adapté pour distribuer la capacité d'accès à la mémoire de masse MM 4 entre ces différentes partitions d'applications et les opérations de maintenance sur la mémoire de masse 4.

$$\text{Ainsi } BW_{MM} = BW_{\text{Partition n°1}} + BW_{\text{Partition n°2}} + \ldots + BW_{\text{Partition n°p}} \left( + BW_{\text{Maintenance}} \right) ;$$

où : $BW_{MM}$ désigne la bande passante de la MM 4, i.e. la taille des données de la mémoire MM 4 auxquelles il peut être accédé pendant un temps donné ;

$BW_{\text{Partition n°i, i= 1 à p}}$ désigne la bande passante octroyée à la partition i, parmi cette bande passante totale de la mémoire MM 4, accessible par la partition i pour ledit temps donné et $BW_{\text{Maintenance}}$ désigne la bande passante attribuée aux opérations de maintenance, la plate-forme comprenant n applications A1, ..., An, le nombre total de partitions pour ces applications étant égal à p.

La portion attribuée à chaque partition résulte par exemple d'une allocation effectuée en fonction d'un budget qui lui a été alloué résultant d'un besoin minimum applicatif, par exemple pris en compte par l'intégrateur.

Dans un mode de réalisation décrit en détail ci-dessous, la mémoire de masse MM 4 est adaptée pour opérer avec le contrôleur 5 selon un cycle de travail, de durée $T_{HW}$, qui est synchronisé ou non avec le cycle de traitement de durée $T_{HW}$ du processeur 10 utilisé pour cadencer les opérations des partitions.

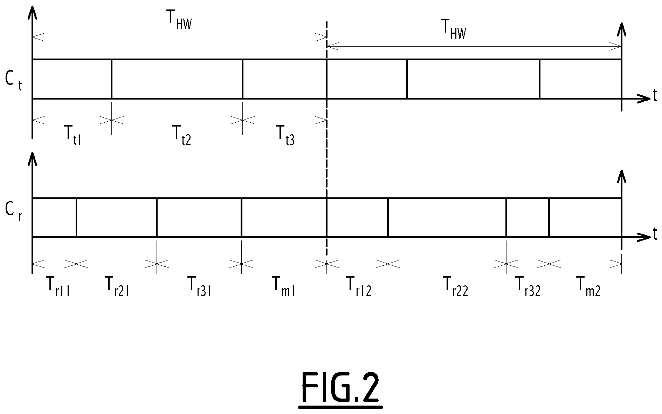

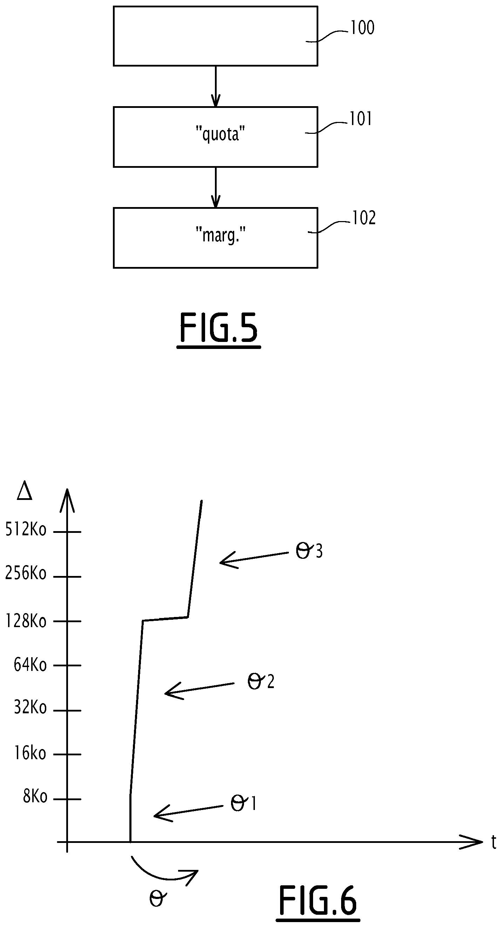

Ainsi, en référence à la figure 2 et à la figure 5, le contrôleur de partage de ressources 5 est adapté pour dans une étape préliminaire 100, acquérir les ratios de la capacité maximum d'accès à la mémoire de masse attribués à chaque partition.

Puis, dans une étape 101, dite étape-quota, pour chaque partition, en considérant la liste de soumission $Z_1$ de cette partition, le contrôleur de partage de ressources 5 détermine, dans une étape 101, quelles commandes postées dans cette liste $Z_1$ (en partant de la plus ancienne commande postée présente dans cette liste) pourront être traitées dans le ratio de la capacité d'accès à la mémoire de masse attribué à cette partition, dans l'hypothèse où le temps d'exécution de chacune de ces commandes est le pire temps d'exécution de ces commandes.

Ainsi, dans un mode de réalisation, il détermine la portion d'intervalle de temps attribuée à chaque partition pour son prochain cycle de durée $T_{HW}$ en fonction du ratio respectif de bande passante (ou du temps ou du volume de données) attribuée à cette partition.

Ainsi, l'ensemble d'applications 2 comprend au total p partitions (dans l'illustration de la figure 2, p=3), la portion théorique d'intervalle de temps $T_{ti}$, i = 1 à p, attribuée théoriquement à la Partition n°i est calculée de la façon suivante :

$$T_{ti} = T_{HW} \times BW_{MM} \div BW_{\text{Partition n°i}}.$$

Par ailleurs, il a été préalablement estimé, dans une étape préparatoire au procédé, le pire temps d'exécution de chaque commande mise en oeuvre par les partitions, à l'aide par exemple de tests et de mesures.

Pour chaque partition, en considérant la liste de soumission $Z_1$ de cette partition, le contrôleur de partage de ressources 5 détermine quelles commandes postées dans cette liste $Z_1$ (en partant de la plus ancienne commande postée présente dans cette liste) pourront être traitées dans la portion théorique d'intervalle de temps calculée pour cette partition, dans l'hypothèse où le temps d'exécution de chacune de ces commandes est le pire temps d'exécution de ces commandes : ce sont le maximum des commandes successives considérées en partant de la plus ancienne telles que la somme de leur pire temps d'exécution est inférieure à la durée correspondant à la portion théorique d'intervalle de temps calculée allouée à cette partition. Ces commandes telles que déterminées sont les commandes sélectionnées pour l'étape de traitement 101 dite étape-quota.

Les commandes sélectionnées pour les partitions sont exécutées.

Dans un mode de réalisation particulier de l'étape 101, un élément unitaire de données est d'abord défini, permettant de simplifier notamment l'exécution de l'étape 101, comme décrit ci-après, en référence à la figure 6 et de la manière suivante :

Tout d'abord, les accès en lecture à la mémoire de masse (i.e. au contrôleur de la mémoire 4 et aux NAND flash) sont caractérisés par les mesures des :

- temps pour lire (séquentiellement et aléatoirement) 512o (plus petite taille échangée avec le contrôleur dans le cas considéré) ;
- temps pour lire (séquentiellement et aléatoirement) 1Ko ;
- temps pour lire (séquentiellement et aléatoirement) 2Ko ;
- temps pour lire (séquentiellement et aléatoirement) 16Ko ;
- temps pour lire (séquentiellement et aléatoirement) 32Ko ;
- temps pour lire (séquentiellement et aléatoirement) 512Ko.

On notera que les informations de taille de page, de nombre de contrôleurs, etc., considérés ici sont pris à titre d'exemple uniquement.

Les « pires cas » de performances pour la lecture dans la mémoire de masse 4 peuvent ainsi être cartographiées (les mêmes tests et graphes sont réalisés de la même façon en écriture), comme représenté en figure 6, avec en abscisse le temps d'accès à un bloc de la mémoire de masse 4 en fonction de la taille du bloc représentée en ordonnée dans un exemple. $\theta 1$ désigne la section [512 o ; 8 Ko] et correspond au temps de récupération d'une page, $\theta 2$ désigne la section [8 Ko ; 128 Ko] et correspond au temps de récupération d'une page sur 16 canaux en parallèle (1 canal = 1 contrôleur + 1 NAND flash), et $\theta 3$ désigne la section [128 Ko ; 256 Ko] et correspond au temps de récupération de deux pages sur 16 canaux en parallèle.

Globalement, on s'aperçoit, dans le cas particulier considéré, que c'est sensiblement toujours le même pire temps, pour toute taille de données entre 1o et 128 Ko.

La taille 16 Ko est alors choisie comme taille d'élément unitaire (il aurait pu être choisi une autre taille dans la plage considérée, mais il a été déterminé par essais multiples que cette taille optimisait l'efficacité du traitement).

En prenant comme hypothèse que le temps d'accès mémoire est égal à $400\mu s$, de 1o à 128 Ko, les valeurs de bande passante correspondantes sont donc :

Pour 512 o : 1,22MB/s
Pour 16 Ko : 39 MB/s
Pour 64 Ko : 156MB/s
Pour 128 Ko : 312MB/s

Tous les accès inférieurs à 16 Ko seront décomptés à 16 Ko. Et les accès supérieurs à 16 Ko seront décomptés en tant que multiples de 16 Ko.

Donc en lissant sur 1s, 39MB/s sont à partager entre les partitions.

Pour déterminer alors le nombre d'éléments unitaires par cycle de travail par partition, dans l'étape 101, dans le cas où la moitié de la bande passante est attribuée à la partition n°1 et où un cycle de travail est de durée 100ms, il existe plusieurs manières d'opérer (que l'on considère la bande passante ou le temps ou le volume de données revient en effet à calculer le même nombre d'éléments unitaires) :

selon un premier exemple, en considérant les bandes passantes : 39 MB/s / 10 cycles dans 1s → 3,9MB / taille de l'élément unitaire → 250 éléments unitaires en totalité / ½ → 125 éléments unitaires réservés pour la partition n°1 ;

Selon un deuxième exemple en considérant le temps : 1s / $400\mu s$ (400 $\mu s$ étant une valeur retenue à titre d'exemple donnant la performance de pire cas associée à la lecture d'une page de la NAND Flash) → 2500 / 10 cycles dans 1s → 250 éléments unitaires en totalité → 125 éléments réservés pour la partition n°1.

Dans l'étape 101, pour chaque commande, le contrôleur 5 décompte le nombre d'éléments unitaires correspondant à la commande en fonction de la taille des données manipulées par la commande (i.e. 1 élément unitaire si cette taille est inférieure ou égale à 16 Ko, et n éléments unitaires si cette taille est n fois 16 Ko). Et les commandes de la partition 1 sélectionnées dans l'étape-quota 101 sont les commandes successives de la liste telles que la somme cumulée de leurs éléments unitaires est inférieure au nombre d'éléments unitaires réservés à la partition 1.

Par exemple, dans le cas d'une commande correspondant à 5 éléments unitaires, il va donc rester après sélection de la commande, 120 éléments réservés pour la Partition n°1 pour sélectionner les commandes suivantes.

Toutefois, le nombre d'éléments unitaires réservés à la Partition n°1 notamment correspond au cas de l'exécution de commandes successives de 1 élément unitaire.

Or le temps effectivement consommé par l'exécution d'une commande de 5 éléments unitaires (80 Ko) est quasiment identique à celui consommé par une commande de 1 élément unitaire (80 Ko), donc du temps disponible pourra être redistribué, comme détaillé ci-dessous en étape 103 (5 commandes d'1 élément unitaire = 5 x 400ps ; 1 commande de 5 éléments unitaires = $500\mu$s << 5 commandes d'1 élément unitaire).

Le graphe $C_t$ avec les portions $T_{ti}$, i = 1 à p=3, attribuées aux partitions n°1 à p=3 indique pour chaque partition, le temps maximum théorique qui sera nécessaire pour traiter les commandes sélectionnées dans l'étape-quota 101. Le contrôleur de partage de ressources 5 est ainsi adapté pour garantir que les commandes sélectionnées dans cette étape-quota 101 sont réalisées pour chaque partition Dès que les commandes sélectionnées pour la partition i ont été exécutées, les commandes sélectionnées pour la partition i+1 sont à leur tour effectuées jusqu'à ce que i+1 = p.

Le graphe $C_r$ avec les portions de temps réelles occupées pour réaliser les commandes des partitions n°1 à p=3 indique pour chaque partition, le temps réel pour traiter les commandes sélectionnées dans l'étape-quota.

Puis, dans une étape 102 dite étape-marge, le contrôleur de partage de ressources 5 calcule le temps restant jusqu'à la fin de son cycle de travail courant au cas où certains au moins des temps réels de réalisation des commandes sélectionnées, $T_{ri}$, i = 1 à p, ont été inférieurs aux temps théoriques $T_{ti}$, i = 1 à p.

S'il reste du temps, i.e. si $T_{t1} + T_{t2} +...+ T_{tp} - T_{r1} - T_{r2} -...- T_{rp}$ est supérieur à 0, alors le contrôleur de partage de ressources 5 distribue le temps restant jusqu'à la fin de son cycle courant, entre les partitions pour traiter une ou des commandes dans la liste de soumission. Dans un mode de réalisation, cette redistribution entre les partitions est effectuée en fonction d'un coefficient de pondération P affecté à chaque file de soumission. Ce coefficient de pondération correspond par exemple à un nombre de commandes présentes dans la file de soumission Z1 associée à la partition. Ainsi si le coefficient de pondération est différent de 0, une ou plusieurs commandes peuvent être effectuées en fonction du temps restant si le pire temps d'exécution cumulé des commandes supplémentaires alors sélectionnées est inférieur au temps restant. Il peut être privilégié par le contrôleur de partage de ressource 5 de sélectionner les commandes associées par ordre de coefficient de pondération décroissant. Les coefficients de pondération sont décrémentés au fur et à mesure de la sélection de commandes pour la partition qui leur est respectivement associée.

Si à l'issue de la réalisation des commandes sélectionnées pour occuper le temps restant, il reste encore du temps jusqu'à l'expiration du cycle courant, l'étape 102 est réitérée.

Sur la figure 2, lors d'un premier cycle de travail, les temps réels pour les partitions n°1, 2, 3 à l'issue de l'étape 102 ont été notés $T_{r11}$, $T_{r21}$, $T_{r31}$ et le temps restant $T_{m1}$. Lors d'un deuxième cycle de travail, les temps réels pour les partitions n°1, 2, 3 à l'issue de l'étape 102 ont été notés $T_{r12}$, $T_{r22}$, $T_{r32}$ et le temps restant $T_{m2}$.

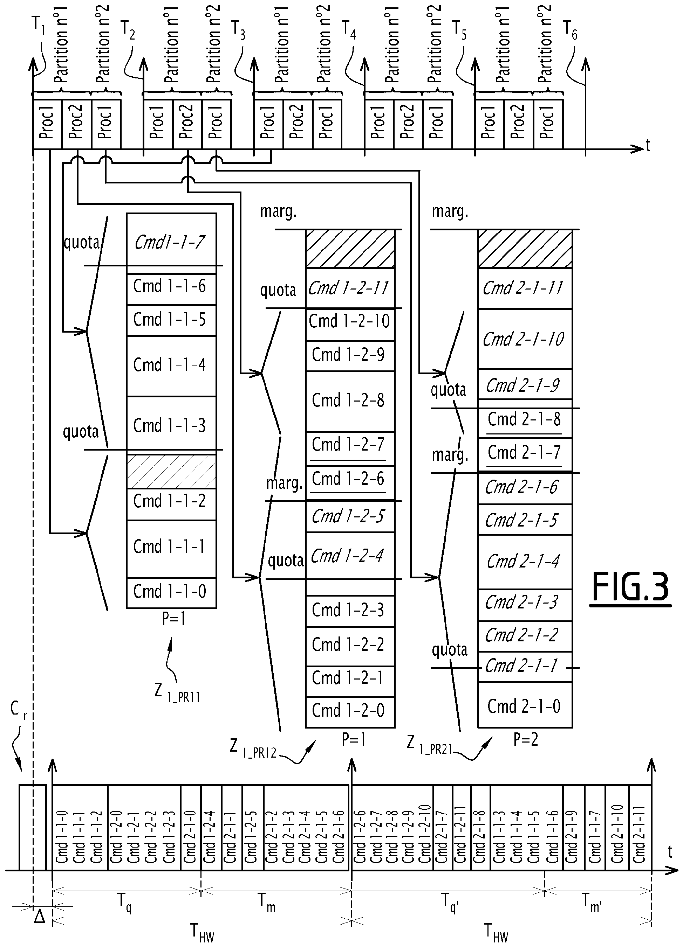

La figure 3 illustre un exemple de partage de l'accès à la mémoire de masse 4, lorsque l'ensemble A d'applications comporte p=2 partitions : la partition n°1 comprenant les processus Proc1 et Proc2 de la Partition n°1 et la partition n°2 qui comporte le processus Proc1 de la partition n°2. Le graphe temporel dans la partie supérieure de la figure 3 illustre que les 3 processus génèrent, via le système de gestion de fichiers 3, des commandes lors des cycles successifs $T_i$-$T_{i+1}$, de durée $T_{HW}$ et dont les instants $T_1$ à $T_6$ sont représentés. Les commandes générées par chacun des processus sont postées par le système de gestion de fichiers 3 dans des files de soumission respectives : la file de soumission Z1_PR11 comprend les commandes issues du processus Proc1 de la partition n°1, la file de soumission Z1_PR12 comprend les commandes issues du processus Proc2 de la partition n°1 et la file de soumission Z1_PR11 comprend les commandes issues du processus Proc1 de la partition n°2.

Les flèches et accolades reliant les processus indiqués dans le graphe temporel de la partie supérieure de la figure 3 et des commandes des files de soumission repèrent quelles commandes sont postées pendant quels cycles de travail des processus. Ainsi les commandes Cmd1-1-0, Cmd1-1-1 et Cmd1-1-2 issus du processus Proc1 de la partition n°1 ont été postées dans la file Z1_PR11 pendant le cycle de travail [$T_1$-$T_2$].

Le graphe temporel $C_r$ en partie inférieure de la figure 3 illustre le contrôle des partages des ressources effectué par le contrôleur de partage de ressources 5. Il séquence le traitement des commandes des processus selon un cycle de durée également de durée $T_{HW}$, par exemple désynchronisé, d'un temps Δ, par rapport au cycle rythmant le travail des processus.

Ainsi, comme décrit ci-dessus en référence à la figure 5, dans une étape-quota, le contrôleur de partage de ressources 5 a sélectionné les commandes Cmd1-1-0, Cmd1-1-1, Cmd1-1-2 du processus Proc1 de la partition n°1, Cmd1-2-0, Cmd1-2-1, Cmd1-2-2, Cmd1-2-3 du processus Proc2 et Cmd2-1-0 du processus Proc1 de la partition n°2, et postées dans le cycle de travail courant ? HW. Le traitement de ces commandes étant réalisé en un temps Tq, il reste un temps Tm pendant lequel au moins une étape-marge est mise en oeuvre par le contrôleur de partage de ressources 5 permettant de traiter des commandes supplémentaires jusqu'à la fin du cycle de travail considéré. Puis un nouveau cycle de travail débute avec une étape-quota de durée Tq' et une étape-marge de durée Tm'.

Les valeurs de pondération P indiquées sous chaque file de soumission sont par exemple des valeurs de priorité des files définies lors de leurs créations.

Dans les files de soumission, les commandes traitées par le contrôleur de partage de ressources 5 pour exécution pendant l'étape courante de type étape-marge sont indiquées en italiques, celles qui seront traitées pour exécution au cycle suivant sont soulignées tandis que celles traitées pour exécution pendant l'étape courante de type étape-quota sont indiquées en caractères «standards », i.e. ni italique, ni souligné.

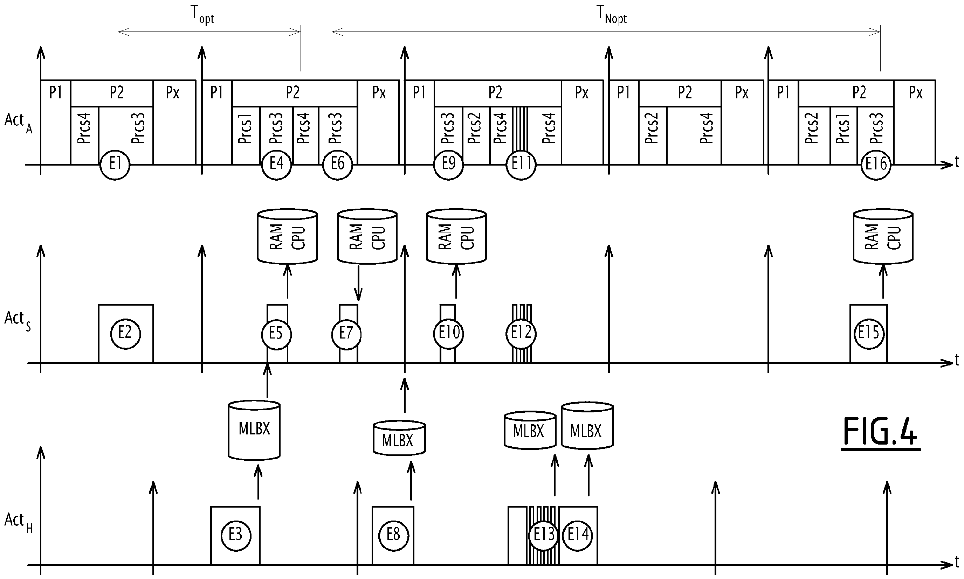

Ci-après en référence à la figure 4 sont décrits des séquencement d'opérations lorsqu'une application réalise un appel à la fonction READ-FILE(). ActA représente les activités au niveau des applications, ActS représente les activités au niveau système de fichier développé en logiciel, notamment au niveau du système de gestion de fichiers et ActH représente les activités au niveau matériel, notamment celles du contrôleur de partage de ressources 5 et de la mémoire de masse.

READ-FILE() simple :

$E_1$ : le processus Proc3 appelle la fonction de lecture de fichier READ-FILE().

$E_2$ : le système de fichier prend la main pour traduire la commande de lecture en commande bas niveau suivant le type de système de fichier (FAT 32, RAW, NTFS, ..), il réalise certaines tâches de gestion de fichiers, puis il génère les commandes de lecture correspondant à cette fonction de lecture de fichier et destinées à la mémoire de masse 4 ; il poste ces commandes dans la file de soumission qui est associée au processus Prcs3 de la partition P2 et qui se trouve dans le bloc d'échanges MLBX 51 du contrôleur de partage de ressources 5.

$E_3$ : les commandes dans cette file de soumission sont sélectionnées, les données lues sont postées dans la file de réalisation associée au processus Prcs3 et qui se trouve dans le bloc d'échanges MLBX 51 du contrôleur de partage de ressources 5.

$E_4$ : le processus Prcs3 est à nouveau séquencé sur le processeur 10 (par le système d'exploitation) ce qui permet au service de système de fichier 3 de continuer ces tâches jusqu'à ce que le traitement en progression soit terminé.

$E_5$ : le système de gestion de fichiers a détecté en sondant la queue de réalisation que des requêtes de lectures ont été exécutés et disponibles dans le bloc d'échanges MLBX 51. Puis il rapatrie les données dans la mémoire RAM du processeur 10 (RAM CPU). N'ayant pas de données additionnelles, il termine le traitement de la fonction READ-FILE() et il redonne la main au processus appelant.

READ-FILE() complexe i.e. l'opération de lecture est découpée sur plusieurs cycles de travail (tandis que dans le cas « simple » décrit ci-dessus, elle était effectuée sur le cycle courant).

$E_6$ : le processus Prcs3 appelle la fonction de lecture de fichier READ-FILE().

$E_7$ : le système de gestion de fichiers 3réalise certaines tâches, puis il génère des commandes de lecture correspondant à cette fonction appelée de lecture de fichier READ-FILE() et destinées à la mémoire de masse 4 ; il poste ensuite ces commandes dans la file de soumission associée au processus Prcs3.

$E_8$ : les commandes sélectionnées dans la file de soumission pour l'étape-quota sont exécutées, les données lues sont postées dans la file de réalisation associée au processus Prcs3 et qui se trouve dans le bloc d'échanges MLBX 51 du contrôleur de partage de ressources 5.

$E_9$ : le processus Prcs3 est à nouveau séquencé et est toujours dans le contexte du système de fichiers 3 jusqu'à ce que le traitement en cours soit terminé.

$E_{10}$ : le système de gestion de fichiers a détecté en sondant la queue de réalisation que des données étaient disponibles dans le bloc d'échanges MLBX 51 et il copie ces données dans la mémoire RAM du processeur 10 (RAM CPU).

$E_{11}$ : le processus Prcs3 est à nouveau séquencé à plusieurs reprises dans le contexte du système de fichier jusqu'à ce que le traitement en progression soit terminé.

$E_{12}$ : le système de gestion de fichiers est séquencé plusieurs fois. N'ayant pas de données disponibles en provenance du contrôleur de partage de ressources 5, il donnera la main aux autres processus.

$E_{13}$ : le contrôleur de partage de ressources 5 a distribué tous les portions de temps aux partitions dans une étape-quota, puis il donne à nouveau la main au processus Prcs3 dans une étape-marge.

$E_{14}$ : le contrôleur de partage de ressources 5 traite de nouvelles commandes présente dans la file de soumission conformément à la portion attribuée à la partition P2.

$E_{15}$ : le système de gestion de fichiers a détecté en sondant la queue de réalisation que des données étaient disponibles dans le bloc d'échanges MLBX 51 et il copie ces données dans la mémoire RAM du processeur 10 (RAM CPU). N'ayant pas de données additionnelles, il termine le traitement de la fonction READ-FILE() et il redonne la main au processus appelant.

Dans un mode de réalisation, les tâches de maintenance sont traitées comme une partition d'application de l'ensemble A par le contrôleur de partage de ressources 5 : une bande passante leur est attribuée, à partir de laquelle un intervalle de temps théorique est déterminé ; puis des commandes sont sélectionnées, comme indiqué dans les étapes 100, 101, 102 de la figure 5, afin de réaliser les opérations de maintenance telles que :

- écrasement de nouveaux blocs de la mémoire de masse 4 libérés par répartition de l'usure (« wear leveling » en anglais) ;
- fusion de blocs ou de pages, causés par des accès aléatoires non alignés, pour optimiser les performances ;
- déplacement de blocs pour éviter des problèmes de rétention de données (proches de la limite de la capacité de correction maximum par contrôle de redondance cyclique CRC) ;

Une difficulté avec les mémoires de masse est que les temps d'accès sont non déterministes (c'est-à-dire qu'il y a des différences entre les temps d'accès pour des mêmes quantités de données). Notamment, il est constaté dans le cas d'une mémoire de masse de type contrôleur de mémoire et NAND flashes, que si les accès séquentiels en lecture ou aléatoires sont très déterministes (les bandes passantes minimum et maximum sont très proches), il n'en va pas de même pour les accès séquentiels ou aléatoires en écriture.

En outre, certains contrôleurs de mémoire (notamment souvent les contrôleurs de mémoire COTS, i.e. en anglais « commercial off-the-shelf », signifiant « vendu sur étagère », mettent en pipeline des opérations d'écriture pour tirer avantage des effets de cache afin d'améliorer les performances. Les contrôleurs de mémoire peuvent en effet grouper des opérations d'écriture concernant un même bloc ou une même page. Il est possible de grouper des commandes de lecture, mais on ne peut pas attendre pour renvoyer les données à l'utilisateur, à la différence de l'écriture, la réponse à une telle opération contient des données de lecture. Une opération de lecture est considérée de façon unitaire. Cependant elle peut profiter d'un effet de cache si les prochaines données lues concernent une page ou un bloc déjà en cache. Ainsi un contrôleur de mémoire peut annoncer une opération d'écriture comme terminée même si elle est toujours en traitement. Une conséquence possible est qu'une ou plusieurs opérations d'écriture peuvent impacter les prochaines opérations. Le mécanisme de partitionnement temporel dans le mode de réalisation décrit ci-dessus est basé sur un accès dans le pire cas de temps d'exécution, qui est calculé en prenant en compte le profil d'utilisation de la mémoire de masse par les partitions.

C'est pourquoi, dans des modes de réalisation, le contrôleur de partage de ressources comprend des sous-blocs de partage de ressources distincts chargés de traiter chacun des types de commandes de type distincts, par exemple un sous-bloc de partage de ressources ne traite que les commandes relatives à la lecture seule et un autre sous-bloc traite les commandes relatives aux lectures/écritures. Et chaque sous-bloc est adapté pour distribuer entre les différentes partitions la bande passante de la mémoire de masse correspondant au pire cas d'exécution et comprend des propres files Z1, Z2, Z3 pour chacune des partitions.

Dans un mode de réalisation, par exemple, en cas de contrôleur de mémoire « propriétaire », une commande ne sera intégrée dans sa file de réalisation Z2 par le contrôleur de partage de ressources 5 que si la réalisation de la commande est réellement achevée (pas d'effet pipeline).

La distribution des traitements dans le temps effectué par le contrôleur de partage de ressource 5 a été décrite ci-dessus au niveau des partitions avec une portion de bande passante attribuée à chaque partition. Dans d'autres modes de réalisation, hors du contexte A653, cette distribution est réalisée au niveau des applications avec une portion de bande passante attribuée à chaque application, ou au niveau des processus avec une portion de bande passante attribuée à chaque processus.

**Partitionnement spatial**

La prise en compte d'un partitionnement spatial de la mémoire de masse requiert une analyse et un contrôle de canaux de perturbation induits notamment par l'architecture et la technologie. Dans la plupart des solutions de mémoires de masse, comme les cartes SD ou SSD, l'architecture est basée sur un contrôleur de mémoire et une mémoire non volatile, typiquement des cellules mémoires flashes dites NAND et la technologie NAND peut donner lieu à ces perturbations de partitionnement suivantes entre applications :

- perturbation en lecture ou écriture: une opération de lecture ou d'écriture à une adresse de bloc logique (LBA) donne lieu à une corruption inattendue de contenu stocké à un ou des LBA(s) voisin(s) ;
- partage de blocs de rechange : un bloc de mémoire utilisé de trop nombreuses fois est déclaré désormais inutilisable ; or ces blocs de rechange étant partagés entre les applications, si une application incontrôlable effectuait trop d'opérations d'écriture, elle consommerait tous les blocs, qui ne serait alors plus disponibles pour les autres applications.

De manière connue, le partitionnement spatial de la plate-forme 1 est assuré en attribuant des zones de mémoire spécifiques dédiées à chaque partition tant au niveau de l'ensemble 2 des applications (avec des mémoires buffers pour lecture et écriture des données au niveau applicatif dans la RAM CPU), que du système de gestion de fichiers (mémoires caches, mémoires d'identificateurs de fichiers ... dans la RAM CPU), du contrôleur de partage de ressource 5 (mémoires de données, files de soumission Z1, de réalisation Z2, et aires de données Z3 physiquement séparées et interdites d'accès entre partitions ... dans une RAM volatile) et de la mémoire de masse 4 (volume(s) de lecture/écriture dédiées exclusivement à chaque partition). De surcroît, l'unité de protection de mémoire (MPU) du processeur 10, fonction typiquement réalisée par l'unité de gestion de mémoire MMU verrouille soit les accès du système de gestion de fichiers 3 à la partition en cours sur la CPU soit les accès du contrôleur de partage de ressource 5 à la mémoire de masse 4. Outre ces mémoires dédiées, des mémoires communes spatiales sont prévues : tables d'allocation de fichiers dans le système de gestion de fichiers 3, des registres de configuration dans le contrôleur de partage de ressource 5, des volumes en lecture seule dans la mémoire de masse 4.

Dans la mémoire de masse 4, les volumes de lecture/écriture dédiées exclusivement à chaque partition sont protégés des accès en provenance d'autres partitions que celle à laquelle ils sont exclusivement attribués par les unités de protection mémoire et par une organisation dans l'espace de nommage dans le standard NMVe en volumes logiques, c'est-à-dire en LBA (« adresse de bloc logique », en anglais « Logical block address »), contigus.

Dans un mode de réalisation, les volumes de mémoire dédiés exclusivement à une partition dans la mémoire de masse 4 comprennent :

- un collecteur de recyclage comprend des cellules de stockage ayant précédemment servi au stockage de données, libérées et disponibles pour stocker des données à écrire via de futures commandes d'écriture ; et/ou
- un ensemble de rechange comprend des cellules de stockage de rechange destinées à remplacer des cellules de stockage défectueuses dans la section dédiée à ladite partition ;

qui ne peuvent donc être partagés avec une autre partition.

Dans un autre mode de réalisation, hors contexte A653 par exemple, ces éléments sont dédiés exclusivement non à chaque partition, mais à chaque application ou à chaque processus.

Dans un mode de réalisation, le contrôleur de partage de ressources 5 est réalisé sous la forme d'un programme d'ordinateur comprenant des instructions qui conduisent le contrôleur à mettre en oeuvre les étapes qui lui incombent du procédé décrit en figure 5. Il peut notamment être stocké sur un support lisible par ordinateur.

Dans un autre mode de réalisation, le contrôleur de partage de ressources 5 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Applications Spécifie Integrated Circuit*).

**Revendications**

1. Contrôleur de partage de ressources (5) adapté pour opérer dans une plate-forme informatique (1) comprenant en outre au moins :

   - un processeur (10),
   - un support de stockage de données (4),
   - des applications logicielles (2) n°1 à p aptes à être exécutées sur le processeur et comprenant des commandes d'accès au support de stockage,

   ledit contrôleur de partage de ressources étant **caractérisé en ce qu'**il est adapté pour, en fonction d'une portion respective prédéterminée, attribuée à chaque application, d'une capacité maximum d'accès au support de stockage, en fonction d'une liste (Z1) de prochaines commandes d'accès au support de stockage à exécuter issues de chaque application et en fonction en outre des temps théoriques maximum de réalisation desdites commandes, sélectionner, dans une première phase de sélection, pour chaque application et pour un prochain cycle temporel d'accès au support de stockage, les prochaines commandes à mettre en oeuvre et pour successivement distribuer, lors dudit prochain cycle temporel, l'accès dudit support à chaque application pour la mise en oeuvre desdites commandes sélectionnées, cet accès dudit support étant distribué à l'application n°p+1 dès que les commandes sélectionnées pour l'application n°p ont été exécutées.

2. Contrôleur de partage de ressources (5) selon la revendication 1, dans lequel la capacité d'accès maximum est un élément parmi un temps maximum de cycle temporel d'accès au support de stockage, une bande passante maximum du support de stockage et un volume de données maximum échangé avec le support de stockage.

3. Contrôleur de partage de ressources (5) selon la revendication 1 ou 2, adapté, lorsque la réalisation des commandes sélectionnées lors de la première phase de sélection pour le cycle temporel en cours pour les applications (2) est terminée, dans une deuxième phase de sélection, pour sélectionner des commandes supplémentaires parmi les prochaines commandes restant à mettre en oeuvre pour chaque application, en fonction du temps restant jusqu'à l'expiration du cycle temporel en cours, d'une pondération affectée à chaque application et des temps théoriques maximum de réalisation desdites commandes.

4. Contrôleur de partage de ressources (5) selon l'une des revendications précédentes, adapté pour définir un élément unitaire correspondant à une taille de données et associé à une capacité d'accès unitaire au support de stockage, pour déterminer, pour chaque application, un nombre de capacités unitaires correspondant à la portion respective prédéterminée qui lui a été attribuée, ledit contrôleur étant adapté en outre pour déterminer, pour chaque commande d'accès, le nombre d'élément(s) unitaire(s) correspondant à ladite commande d'accès, tel que la commande d'accès étant relative à un bloc de données, ledit nombre d'élément(s) unitaire(s) sera 1 si le bloc est de taille inférieure ou égale à celle de l'élément unitaire et sera n si le bloc est de taille égale à n fois la taille de l'élément unitaire, le contrôleur étant adapté pour sélectionner, pour ladite application, les prochaines commandes à mettre en oeuvre dans la première phase de sélection comme le maximum de commandes successives telles que la somme des éléments unitaires correspondant auxdites commandes est inférieure au nombre de capacités unitaires correspondant à la portion respective prédéterminée qui lui a été attribuée.

5. Contrôleur de partage de ressources (5) selon l'une des revendications précédentes, , dans lequel des commandes de la liste sont issues d'une application de maintenance du support de stockage de données (4) comprenant au moins une opération de maintenance parmi :

- écrasement de blocs de support de stockage de données libérés par répartition de l'usure ;
- fusion de blocs ou de pages pour optimiser des accès aléatoires non alignés ;
- déplacement de blocs pour réduire des problèmes de rétention de données.

6. Plate-forme informatique (1) comprenant :

- un processeur (10),
- un support de stockage de données (4),
- des applications logicielles (2) aptes à être exécutées sur le processeur et comprenant des commandes d'accès au support de stockage, et
- un contrôleur de partage de ressources (5) selon l'une des revendications précédentes.

7. Plate-forme informatique (1) selon la revendication 6, dans laquelle le support de stockage comprend des cellules de stockages et la plate-forme informatique est adaptée pour dédier des sections spécifiques distinctes du support de stockage de données à des applications distinctes, les cellules de stockages d'une section dédiée à une application étant accessibles à ladite application et interdites aux autres applications, une section dédiée à une application comprenant au moins un élément parmi un collecteur de recyclage et un ensemble de rechange tels que :

- un collecteur de recyclage comprend des cellules de stockage ayant précédemment servi au stockage de données et disponibles pour stocker des données à écrire via de futures commandes d'écriture ;
- un ensemble de rechange comprend des cellules de stockage de rechange destinées à remplacer des cellules de stockage défectueuses dans la section dédiée à ladite application.

8. Procédé de partage des ressources dans une plate-forme informatique (1) comprenant un contrôleur de partage de ressources (5), un processeur (10), un support de stockage de données (4), des applications logicielles (2) n°1 à p aptes à être exécutées sur le processeur et comprenant des commandes d'accès au support de stockage ledit procédé étant **caractérisé en ce qu'**il comprend les étapes suivantes mises en oeuvre par le contrôleur de partage de ressources et consistant à :

- en fonction d'une portion respective prédéterminée, attribuée à chaque application, d'une capacité maximum d'accès au support de stockage, en fonction d'une liste (Z1) de prochaines commandes d'accès au support de stockage à exécuter issues de chaque application et en fonction en outre des temps théoriques maximum de réalisation desdites commandes, sélectionner, dans une première phase de sélection, pour chaque application et pour un prochain cycle temporel d'accès au support de stockage, les prochaines commandes à mettre en oeuvre et
- successivement distribuer, lors dudit prochain cycle temporel, l'accès dudit support à chaque application pour la mise en oeuvre desdites commandes sélectionnées, selon lequel cet accès dudit support est distribué à l'application n°p+1 dès que les commandes sélectionnées pour l'application n°p ont été exécutées.

9. Procédé de partage des ressources dans une plate-forme informatique (1) selon la revendication 8, selon lequel la capacité d'accès maximum est un élément parmi un temps maximum de cycle temporel d'accès au support de stockage, une bande passante maximum du support de stockage et un volume de données maximum échangé avec le support de stockage.

10. Procédé de partage de ressources (5) selon la revendication 8 ou 9, comprenant l'étape, lorsque la réalisation des commandes sélectionnées lors de la première phase de sélection pour le cycle temporel en cours pour les applications (2) est terminée, dans une deuxième phase de sélection, de sélectionner des commandes supplémentaires parmi les prochaines commandes restant à mettre en oeuvre pour chaque application, en fonction du temps restant jusqu'à l'expiration du cycle temporel en cours, d'une pondération affectée à chaque application et des temps théoriques maximum de réalisation desdites commandes.


**Patentansprüche**

1. Resource Sharing Controller (5), der geeignet ist, in einer IT-Plattform (1) zu operieren, die ferner mindestens umfasst:

   - einen Prozessor (10),
   - ein Datenspeichermedium (4),
   - Softwareanwendungen (2) Nr. 1 bis p, die imstande sind, auf dem Prozessor ausgeführt zu werden und Befehle für den Zugriff auf das Speichermedium enthalten,

   wobei der Resource Sharing Controller **dadurch gekennzeichnet ist, dass** er in Abhängigkeit von einem jeweiligen vorbestimmten, jeder Anwendung zugeordneten Teil einer maximalen Kapazität für den Zugriff auf das Speichermedium, in Abhängigkeit von einer Liste (Z1) nächster auszuführender Befehle für den Zugriff auf das Speichermedium, die von jeder Anwendung stammen, und ferner in Abhängigkeit von den maximalen theoretischen Zeiten für die Ausführung dieser Befehle geeignet ist, in einer ersten Auswahlphase für jede Anwendung und für einen nächsten zeitlichen Zyklus des Zugriffs auf das Speichermedium die nächsten auszuführenden Befehle auszuwählen und während des nächsten zeitlichen Zyklus den Zugriff des Mediums auf jede Anwendung für die Ausführung der ausgewählten Befehle nacheinander zu verteilen, wobei dieser Zugriff des Mediums auf die Anwendung Nr. p+1 verteilt wird, sobald die für die Anwendung Nr. p ausgewählten Befehle ausgeführt worden sind.

2. Resource Sharing Controller (5) nach Anspruch 1, wobei die maximale Zugriffsfähigkeit ein Element von einer maximalen zeitlichen Zykluszeit für den Zugriff auf das Speichermedium, einer maximalen Bandbreite des Speichermediums und einem maximalen Datenvolumen ist, das mit dem Speichermedium ausgetauscht wird.

3. Resource Sharing Controller (5) nach Anspruch 1 oder 2, der, wenn die Ausführung der in der ersten Auswahlphase für den laufenden zeitlichen Zyklus ausgewählten Befehle für die Anwendungen (2) abgeschlossen ist, in einer zweiten Auswahlphase geeignet ist, zusätzliche Befehle aus den nächsten noch auszuführenden Befehlen für jede Anwendung in Abhängigkeit von der verbleibenden Zeit bis zum Ablauf des aktuellen zeitlichen Zyklus, einer jeder Anwendung zugeteilten Gewichtung und den theoretischen maximalen Zeiten für die Ausführung der Befehle auszuwählen.

4. Resource Sharing Controller (5) nach einem der vorhergehenden Ansprüche, der geeignet ist, ein Einheitselement zu definieren, das einer Datengröße entspricht und einer unitären Zugriffskapazität auf das Speichermedium zugeordnet ist, um für jede Anwendung eine Anzahl von unitären Kapazitäten zu bestimmen, die dem jeweiligen vorbestimmten Teil entspricht, die ihr zugeordnet wurde, wobei der Controller ferner geeignet ist, für jeden Zugriffsbefehl die Anzahl von unitären Elementen zu bestimmen, die dem Zugriffsbefehl entsprechen, beispielsweise wenn sich der Zugriffsbefehl auf einen Datenblock bezieht, die Anzahl der unitären Elemente 1 ist, wenn der Block kleiner oder gleich der Größe des unitären Elements ist und n ist, wenn der Block n-mal so groß wie die Größe des unitären Elements ist, wobei der Controller geeignet ist, für die Anwendung die nächsten Befehle auszuwählen, die in der ersten Auswahlphase als das Maximum an aufeinanderfolgenden Befehlen auszuführen sind, so dass die Summe der unitären Elemente, die diesen Befehlen entspricht, kleiner ist als die Anzahl der unitären Kapazitäten, die dem jeweiligen vorbestimmten Teil entspricht, die ihr zugeordnet wurde.

5. Resource Sharing Controller (5) nach einem der vorhergehenden Ansprüche, wobei Befehle in der Liste aus einer Wartungsanwendung des Datenspeichermediums (4) stammen, die mindestens einen der folgenden Wartungsvorgänge umfasst:

   - Überschreiben von Datenspeichermedienblöcken, die durch Wear-Leveling freigegeben wurden;
   - Zusammenführen von Blöcken oder Seiten, um nicht ausgerichtete Zufallszugriffe zu optimieren;
   - Verschieben von Blöcken, um Probleme mit der Vorratsdatenspeicherung zu verringern.

**6.** IT-Plattform (1), umfassend:

- einen Prozessor (10),
- ein Datenspeichermedium (4),
- Softwareanwendungen (2), die imstande sind, auf dem Prozessor ausgeführt zu werden und Befehle für den Zugriff auf das Speichermedium umfassen, und
- einen Resource Sharing Controller (5) nach einem der vorhergehenden Ansprüche.

**7.** IT-Plattform (1) nach Anspruch 6, wobei das Speichermedium Speicherzellen umfasst und die IT-Plattform geeignet ist, verschiedene spezifische Abschnitte des Datenspeichermediums verschiedenen Anwendungen zuzuweisen, wobei die Speicherzellen eines einer bestimmten Anwendung zugewiesenen Abschnitts für die Anwendung zugänglich und für die anderen Anwendungen untersagt sind, wobei ein einer Anwendung zugewiesener Abschnitt mindestens einen Recycling-Sammler oder eine Austauschanordnung umfasst wie zum Beispiel:

- einen Recycling-Sammler mit Speicherzellen, die zuvor zum Speichern von Daten gedient haben und zum Speichern von über zukünftige Schreibbefehle zu schreibende Daten verfügbar sind;
- eine Austauschanordnung mit Austauschspeicherzellen, die bestimmt sind, defekte Speicherzellen in dem der genannten Anwendung zugewiesenen Abschnitt zu ersetzen.

**8.** Verfahren für Resource Sharing in einer IT-Plattform (1), die einen Resource Sharing Controller (5), einen Prozessor (10), ein Datenspeichermedium (4), Softwareanwendungen (2) Nr. 1 bis p, die imstande sind, auf dem Prozessor ausgeführt zu werden und Befehle für den Zugriff auf das Speichermedium enthalten, umfasst, wobei das Verfahren **dadurch gekennzeichnet ist, dass** es die folgenden Schritte umfasst, die von dem Resource Sharing Controller ausgeführt werden und die darin bestehen:

- in Abhängigkeit von einem jeweiligen vorbestimmten, jeder Anwendung zugeordneten Teil einer maximalen Kapazität für den Zugriff auf das Speichermedium, in Abhängigkeit von einer Liste (Z1) nächster auszuführender Befehle für den Zugriff auf das Speichermedium, die von jeder Anwendung stammen, und ferner in Abhängigkeit von den maximalen theoretischen Zeiten für die Ausführung dieser Befehle in einer ersten Auswahlphase für jede Anwendung und für einen nächsten zeitlichen Zyklus des Zugriffs auf das Speichermedium die nächsten auszuführenden Befehle auszuwählen und
- während des nächsten zeitlichen Zyklus den Zugriff des Mediums auf jede Anwendung für die Ausführung der ausgewählten Befehle nacheinander zu verteilen, wobei dieser Zugriff des Mediums auf die Anwendung Nr. p+1 verteilt wird, sobald die für die Anwendung Nr. p ausgewählten Befehle ausgeführt worden sind.

**9.** Resource Sharing Verfahren in einer IT-Plattform (1) nach Anspruch 8, wobei die maximale Zugriffsfähigkeit ein Element von einer maximalen zeitlichen Zykluszeit für den Zugriff auf das Speichermedium, einer maximalen Bandbreite des Speichermediums und einem maximalen Datenvolumen ist, das mit dem Speichermedium ausgetauscht wird.

**10.** Resource Sharing Verfahren (5) nach Anspruch 8 oder 9, umfassend den Schritt, wenn die Ausführung der in der ersten Auswahlphase für den laufenden zeitlichen Zyklus ausgewählten Befehle für die Anwendungen (2) abgeschlossen ist, in einer zweiten Auswahlphase zusätzliche Befehle aus den nächsten noch auszuführenden Befehlen für jede Anwendung in Abhängigkeit von der verbleibenden Zeit bis zum Ablauf des aktuellen zeitlichen Zyklus, einer jeder Anwendung zugeteilten Gewichtung und den theoretischen maximalen Zeiten für die Ausführung der Befehle auszuwählen.

**Claims**

**1.** A resource sharing controller (5) adapted for operating in a computer platform (1) further comprising at least:

- a processor (10),
- a data storage medium (4),
- software applications (2) nos. 1 to p adapted for being executed on the processor and comprising access commands to the storage medium,

said resource sharing controller being **characterized in that** it is adapted, as a function of a respective predetermined portion, allocated to each application, of a maximum access capacity to the storage medium, as a function of a list (Z1) of next commands of access to the storage medium to be executed derived from each application and further as a function of the theoretical maximum performance times of said commands, for selecting, in a first selection phase, for each application and for a next temporal cycle for access to the storage medium, the next commands to be implemented and for successively distributing, during said next temporal cycle, the access to said medium to each application for the implementation of said selected commands, this access of said medium being distributed to application no. p+1 once the selected commands for application no. p have been executed.

2. The resource sharing controller (5) according to claim 1, wherein the maximum access capacity is an element from among a maximum temporal cycle time for access to the storage medium, a maximum bandwidth of the storage medium and a maximum volume of data exchanged with the storage medium.

3. The resource sharing controller according to claim 1 or 2, adapted, when the performance of the commands selected during the first selection phase for the temporal cycle in progress for the applications is completed, in a second selection phase, to select additional commands from among the next commands remaining to implement for each application, as a function of the time remaining until expiration of the temporal cycle in progress, a weight assigned to each application and theoretical maximum times for performance of said commands.

4. The resource sharing controller (5) according to any of the preceding claims, wherein the resource sharing controller is adapted for defining a unitary element corresponding to a data size and associated with a unitary access capacity to the storage medium, determining, for each application, a number of unitary capacities corresponding to the predetermined respective portion that has been assigned to it, said controller further being adapted for determining, for each access command, the number of unitary element(s) corresponding to said access command, such that the access command being relative to a data block, said number of unitary element(s) will be 1 if the block has a size smaller than or equal to that of the unitary element and will be n if the block has a size equal to n times the size of the unitary element, the controller being adapted for selecting, for said application, the next commands to be implemented in the first selection phase as the maximum successive commands such that the sum of the unitary elements corresponding to said commands is less than the number of unitary capacities corresponding to the predetermined respective portion that was assigned to it.

5. The resource sharing controller (5) according to any of the preceding claims, wherein commands of the list are derived from a maintenance operation of the data storage medium (4) comprising at least one maintenance operation from among:

   - leveling of data storage medium blocks freed by distributing the wear;
   - merging blocks or pages to optimize unaligned random accesses;
   - moving blocks to reduce data retention problems.

6. A computer platform (1) comprising:

   - a processor (10),
   - a data storage medium (4),
   - software applications (2) adapted for being executed on the processor and comprising access commands to the storage medium, and
   - a resource sharing controller (5) according to one of the preceding claims.

7. The computer platform (1) according to claim 6, wherein the storage medium comprises storage cells and the computer platform is adapted for dedicating separate specific sections of the data storage medium to separate applications, the storage cells of a section dedicated to an application being accessible to said application and prohibited to the other applications, a section dedicated to an application comprising at least one element from among a recycling collector and a spare assembly such that:

   - a recycling collector comprises storage cells having previously been used for data storage and available to store data to be written via future write commands;
   - a spare assembly comprises spare storage cells intended to replace defective storage cells in the section dedicated to said application.

8. A resource sharing method in a computer platform (1) comprising a resource sharing controller (5), a processor (10), a data storage medium (4), software applications (2) nos. 1 to p adapted for being executed on the processor and comprising access commands to the storage medium
said method comprising the following steps implemented by the resource sharing controller and consisting of:

- as a function of a respective predetermined portion, allocated to each application, of a maximum access capacity to the storage medium, as a function of a list (Z1) of next commands of access to the storage medium to be executed derived from each application and further as a function of the theoretical maximum performance times of said commands, for selecting, in a first selection phase, for each application and for a next temporal cycle for access to the storage medium, the next commands to be implemented and
- successively distributing, during said next temporal cycle, the access to said medium to each application for the implementation of said selected commands, wherein this access of said medium is distributed to application no. p+1 once the selected commands for application no. p have been executed.

9. The resource sharing method in a computer platform (1) according to claim 8, wherein the maximum access capacity is an element from among a maximum temporal cycle time for access to the storage medium, a maximum bandwidth of the storage medium and a maximum volume of data exchanged with the storage medium.

10. The resource sharing method according to claim 8 or 9, comprising the step, when the performance of the commands selected during the first selection phase for the temporal cycle in progress for the applications is completed, in a second selection phase, to select additional commands from among the next commands remaining to implement for each application, as a function of the time remaining until expiration of the temporal cycle in progress, a weight assigned to each application and theoretical maximum times for performance of said commands.

FIG.1

$$\text{FIG.2}$$

FIG.3

FIG.4

## FIG.5

## FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2919084 A1